# EUROPEAN PATENT APPLICATION

(11) **EP 1 587 050 A1**
(43) Date of publication of application: **19.10.2005**
(21) Application number: 04290987.9
(22) Date of filing: 13.04.2004
(51) Int. Cl.: G09G 3/28, G09G 3/20

(54) **Universal signal timing controller for a plasma display panel**

(71) Applicant: DEUTSCHE THOMSON-BRANDT GMBH, 78048 Villingen-Schwenningen (DE)
(72) Inventor: Weitbruch, Sébastien, 92648 Boulogne Cedex (FR); Thebault, Cédric, 92648 Boulogne Cedex (FR); Correa, Carlos, 92648 Boulogne Cedex (FR)
(74) Representative: Cour, Pierre

(57) **Abstract**

The invention relates to a universal Power Timing Controller (PTC) unit intended for controlling the image memory and the line power boards of a Plasma Display Panel (PDP). The PTC is responsible for generating control signals for the power boards of the PDP in order that they produce the correct waveforms (e.g. priming, erasing, addressing, sustaining...) to be applied on the lines of cells of the PDP and control signals for the image memory of the PDP. According to the invention, the PTC has a fully programmable structure. It can be included in any kind of PDP and is capable of producing appropriate control signals for any kind of power boards. The PTC comprises programmable memories or LUTs (look-up tables) in which the data defining the display mode of the panel and data defining elementary control signals required by the line power boards for processing operations associated to each phase period of the frame are stored.

## Description

The invention relates to a universal Power Timing Controller (PTC) unit intended for controlling the image memory and the line power boards of a Plasma Display Panel (PDP).

### Background

Actual PDPs are based on a dedicated signal processing integrated circuit including or not a Power Timing Control (PTC) unit. This PTC is responsible for generating control signals for the power boards of the PDP in order that they produce the correct waveforms (e.g. priming, erasing, addressing, sustaining...) to be applied on the lines of cells of the PDP and control signals for the image memory of the PDP. In the prior art, it is common to have a specific PTC developed and adapted especially to one PDP technology and to one type of power boards. When a new panel is designed (e.g. HDTV...) or when the technology is changing (with new waveforms required), the PTC has to be redesigned.

### Invention

It is our goal to present a universal PTC able to generate any kind of control signals for any kind of panel technology (WVGA, WXGA, HDTV, ALIS...). This concept is based on a fully programmable new structure. This PTC is included in an integrated circuit in the PDP or in a separate integrated circuit.

The present invention concerns a power timing controller unit for a plasma display panel comprising a plurality of cells arranged in rows and columns, an image memory for memorizing subfield frames of at least one image to be displayed by the plasma display panel, data drivers and line power boards for generating respectively voltage waveforms to be applied on the columns and lines of cells, said power timing controller unit being used for controlling the image memory and the line power boards in order that the image frame stored in the image memory be displayed by the cells of the plasma display panel, characterized in that it comprises at least a programmable memory comprising data defining the display mode of the panel and data defining elementary control signals required by the line power boards for processing operations associated to each phase period of the frame and in that it generates control signals for the image memory and the line power boards from said data.

The structure of this PTC unit is fully programmable. Thus, the control signals outputted by the PTC unit can be easily adapted to the technology and/or the display mode of the panel by modifying the content of its programmable memory.

The invention concerns also a plasma display panel comprising a plurality of cells arranged in rows and columns, an image memory for memorizing at least one image frame to be displayed by the plasma display panel, data drivers and line power boards for generating respectively voltage waveforms to be applied on the columns and lines of cells and a power timing controller unit for controlling the image memory and the line power boards as previously defined.

### Drawings

Exemplary embodiments of the invention are illustrated in the drawings and are explained in more detail in the following description.
Fig.1 represents schematically a classical PDP;
Fig.2 represents the functional blocks of a power timing controller unit according to the invention;
Fig.3 represents the functional blocks of a sequencer module of the PTC unit of Fig.2, and
Fig.4 represents the functional blocks of a line controller module of the PTC unit of Fig.2.

### Description of exemplary embodiments

In the present description, a phase operation refers to an operation of priming or addressing or sustaining or erasing of cells of the PDP and an elementary phase operation refers to the operation for addressing one line or for producing one sustain pulse.

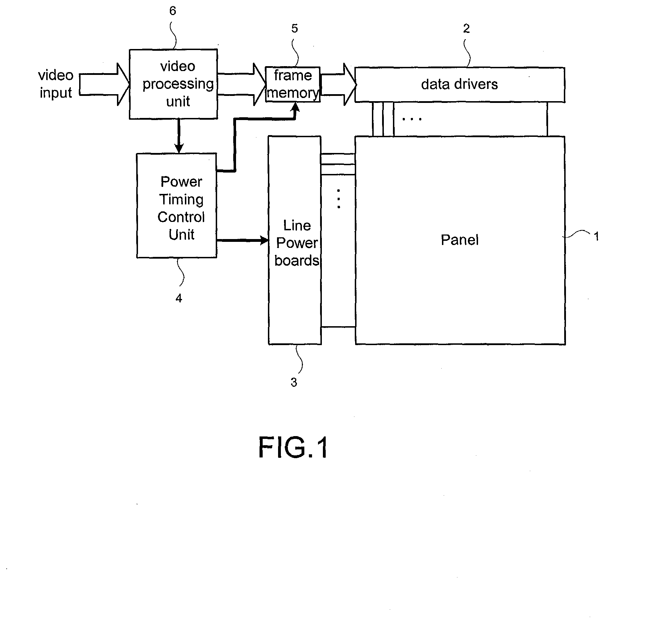

As illustrated by Figure 1, a classical PDP comprises a plurality of cells 1 arranged in rows and columns. Data drivers 2 and line power boards 3 are used for controlling respectively the voltage waveforms applied on the columns and the lines of the PDP. These waveforms depend on the display mode (50 Hz, 60 Hz, 100Hz, PC...) and/or the PDP panel technology (WVGA, WXGA, HDTV, ALIS...).

A PTC unit 4 is used for controlling the power boards 3 and the image memory 5 of the PDP which transmits data to the data drivers 2. The data stored in the image memory 5 are image subfield frames coming from a video processing unit 6. This unit transcodes image frames of a video input signal into image subfield frames. The image is displayed subfield by subfield in the panel 1.

According to the invention, it is proposed a universal PTC unit with a fully programmable structure that can be included in any kind of PDP and that is capable of producing appropriate control signals for any kind of power boards. To this end, the PTC comprises programmable memories or LUTs (look-up tables) in which the data defining the display mode of the panel and data defining elementary control signals required by the line power boards for processing operations associated to each phase period of the frame are stored. These data are used by the PTC for producing the correct control signals to be applied to the image memory 5 and to the line power boards 3 for displaying the image.

The content of the LUTs is adapted to the PDP in which the PTC is included.

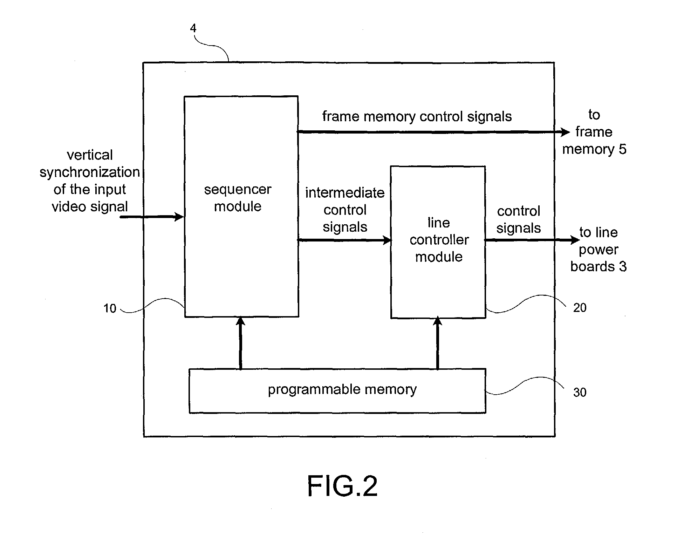

As illustrated by the figure 2, the PTC unit 4 according to the invention comprises :
- a sequencer module 10 for generating intermediate control signals for the power boards 3 and control signals for the image memory 5,
- a line controller module 20 for converting the intermediate control signals into control signals usable by the power boards of the PDP for generating the waveforms to be applied on the lines of the PDP, and
- a programmable memory 30 storing three types of data : data defining the display mode of the panel and data defining elementary control signals required by the line power boards for processing operations associated to each phase period of the frame.

The data defining the display mode are for example :
- the display rate of the PDP;
- the number, the order, the weight and the start time of the subfields in the frame;
- the phase operations (priming or not,...) required for each subfield;
- some phase operation parameters like the erase duration, the type of addressing (selective write or selective erase), the addressing speed, the number of sustain pulses per subfield,... and
- the number of lines to be addressed.

The data defining elementary control signals required by the line power boards for processing operations associated to each phase period of the frame are the following :
- the elementary control signal required by the line power boards for priming cells of the PDP,
- the elementary control signals required by the line power boards for addressing one line of cells,
- the elementary control signals required by the line power boards for generating a sustain pulse,
- the elementary control signals required by the line power boards for erasing the cells of the PDP, and
- any elementary control signals required by the line power boards for any additional waveforms to be defined.

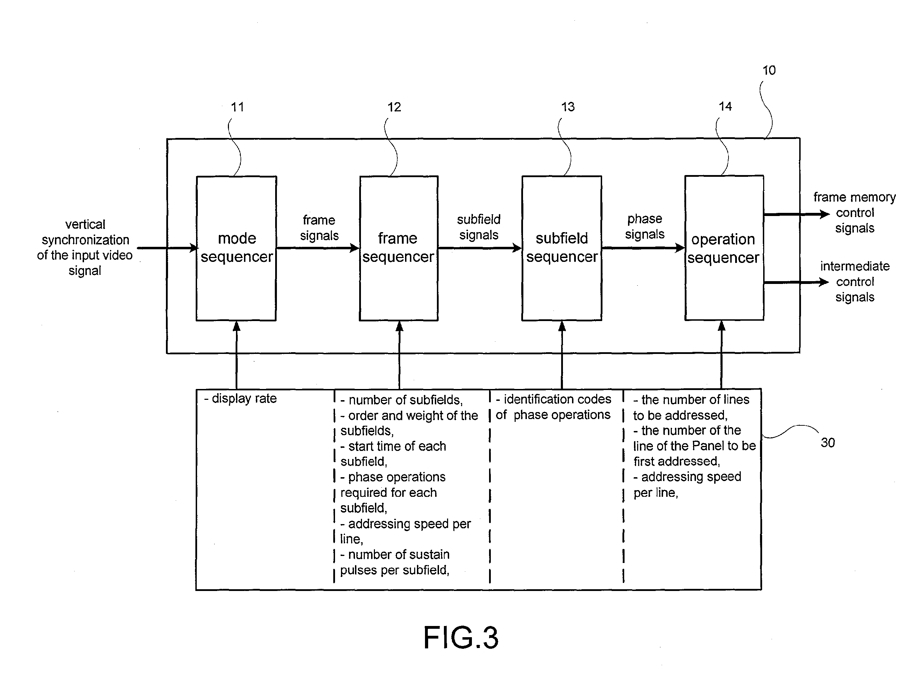

In a preferred embodiment of the invention, the sequencer module 10 comprises 4 sub-modules : a mode sequencer 11, a frame sequencer 12, a subfield sequencer 13 and an operation sequencer 14, as illustrated by figure 3. These four sequencers can extract data from the programmable memory 30.

### The mode sequencer

The mode sequencer 11 is designed for generating frame signals relating to the display rate (50 Hz, 60Hz, ...) stored a first portion of the programmable memory 30. So, it generates a vertical synchronization signal adapted to that display rate, for example a signal with a pulse every 20ms when the display rate is 50 Hz. This sub-module is also capable of generating a second output vertical synchronization signal at the middle of the output video frame for performing, for example, the best possible EUTV/FFC coding as proposed in the European patent application EP 0 982 708 for the large area flicker reduction. In this coding, the subfields are grouped in two consecutive subfields groupings which are substantially identical in terms of subfields. The first subfields grouping is present between a first output vertical synchronization signal and the consecutive second output vertical synchronization signal while the second subfields grouping is present between said second output vertical synchronization signal and the consecutive first output vertical synchronization signal. For implementing this coding, a specific data should be stored in the first portion of the memory 30.

This sub-module is also in charge of frame dropping or frame repetition by applying the correct control signal (read signal) to the image memory if the display rate of the PDP does not correspond to the display rate of the input video signal. To this end, the mode sequencer receives from the video processing unit 6 a vertical synchronization signal associated to the video signal transmitted to the image memory 5, determines the video frames to be dropped or repeated when the vertical synchronization signal associated to the input video signal is different from the vertical synchronization signal corresponding to the display rate of the PDP and generates an appropriate control signal for the image memory 5 that is used by the operation sequencer during addressing operations.

### The frame sequencer

The frame sequencer 12 generates for each frame signal a sequence of subfield signals. These signals are depending on the display mode data (display rate, number of subfields, ...) of the PDP. Indeed, a frame is composed in a sequence of subfields, each of them having a predetermined structure. The frame sequencer 12 generates these subfield signals in accordance with display mode data stored in a second portion of the memory 30 as shown in figure 3. It generates one subfield signal for each subfield of the frame. This signal comprises the following parameters :
- the number, the order, the weight and the start position of the subfields in the frame;
- the phase operations (priming or not,...) required for each subfield;
- some other parameters specific to the phase operations e.g the erase duration, the type of addressing (selective write or selective erase), the addressing speed, the number of sustain pulses per subfield,...

The frame sequencer 12 transmits these signals to the subfield sequencer 13.

The time parameters are calculated by the frame sequencer in order to be synchronized on the vertical synchronization signal(s) generated by the mode sequencer 11. Preferably, different sets of parameters are defined in order to implement the power level control method disclosed in the international patent application WO 00/46782 or the method for improving grey scale fidelity portrayal of pictures disclosed in the European patent application EP 1 353 315.

### The subfield sequencer

The subfield sequencer 13 converts each subfield signal into a timing of phase signals, each associated to a phase operation in the frame. It generates for example, for each subfield, a sequence comprising a priming signal, a selective write addressing signal, a sustain signal and an erase signal in accordance with the parameters includes in the subfield signal. In a preferred embodiment, 32 different phase signals (standard priming, low luminance priming, selective write addressing, selective erase addressing,...) can be used by this sequencer. These phase signal signals are identified by 32 codes stored in a third portion of the memory 30.

### The operation sequencer

The operation sequencer 14 converts each phase signal into a sequence of elementary phase signals, called intermediate control signals, used for implementing the corresponding phase. An elementary phase signal is for example a signal for addressing one line of cells, a priming signal, a signal for generating one sustain pulse or an erasing signal. All these elementary signals will be processed by the line controller module 20 for building the control signals of the power boards 3. The elementary phase signals comprise the duration and the start time of the corresponding elementary phase operations. These parameters are calculated in order that the corresponding elementary phase operations be synchronized between each other.

For example, the operation sequencer 14 converts each addressing signal into a plurality of successive elementary addressing signals, like addressing line 1, addressing line 2, ... Each elementary addressing signal can be a selective write addressing or a selective erase addressing. These elementary addressing signals are for example generated by an address state machine. External parameters defining the first line to be addressed as well as the number of lines p to be addressed can be extracted from a portion of the memory 30 in order to implement a video dependent addressing as disclosed in the European patent application EP 0 807 919.

Preferably, the address state machine takes also into account some parameters, like speed factor or "line dummies", to generate the addressing signals. For example, an addressing speed factor is defined in the memory 30 for each line. It indicates the addressing speed to be used for this line. Furthermore, "line dummies" can also be defined in the memory. They indicate the outputs of the line drivers that are not connected to the panel. Indeed, for various reasons, some of the outputs of the line drivers can be not connected to the panel and should not be addressed. A waveform corresponding to a blanked line is used for these lines.

The operation sequencer converts also each sustain signal into a plurality of elementary sustain signals, one for each sustain pulse. Preferably, the state machine used to generate these signals is capable of counting the total number of sustain pulses used per frame. Based on this number, a limit can be defined so that, if the total number of sustain pulses is beyond this limit, the sustain state machine will modify the sustain parameters, like the number of sustain pulses of each subfield, stored in the memory 30 in order to reduce by a delta value the sustain duration of the frame as disclosed in the European patent application EP 1 365 382.

In the same manner, this sequencer converts each priming or erasing signal into appropriate elementary signals in order that the line controller module 20 be capable of generating appropriate control signals for the generation of a priming waveform or an erasing waveform.

All these intermediate control signals are then transmitted to the line controller module 20 which is like a decoder which converts them into control signals utilizable by the line power boards 3 of the PDP.

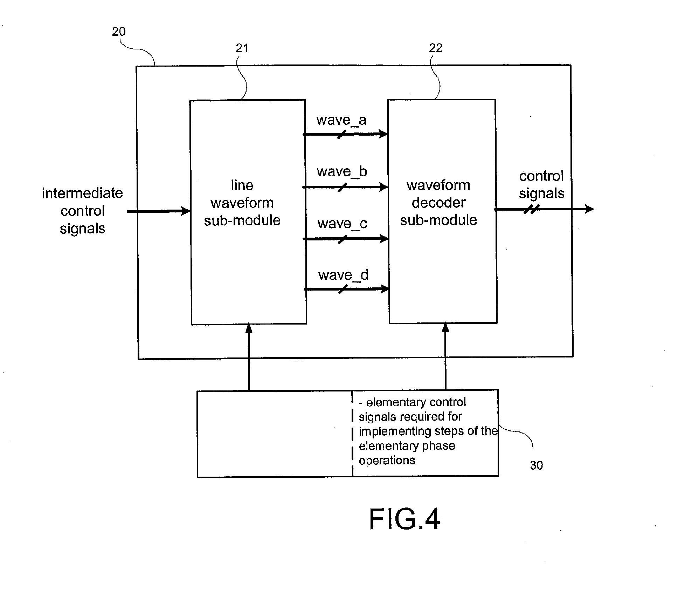

As illustrated by figure 4, the line controller module 20 comprises two sub-modules, a line waveform sub-module 21 and a waveform decoder sub-module 22, in relation with the programmable memory 30.

### The line waveform sub-module

The first sub-module 21 decomposes each intermediate control signal corresponding to an elementary phase operation coming from the sequencer module 10 into a timing of basic steps like for example, for a priming signal, a first step for producing a first voltage plateau during a first time duration, a second step for producing a positive voltage ramp during a second time duration, a third step for producing a second voltage plateau higher than the first voltage plateau during a third time duration and a fourth step for producing a voltage drop during a fourth time duration. As indicated in the figure 4, the basic steps are preferably transmitted in the form of a plurality of parallel signals, like for example four signals wave_a, wave_b, wave_c and wave_d. These signals will be performed in parallel by the waveform decoder sub-module 22. Each one of these signals is defined so as to contain all the information related to the control signals of a dedicated portion of the power boards. For example, if seven elementary signals are required to control a dedicated circuit of the line power boards 3 and that some combinations of these elementary signals are forbidden, it is important that they are contained in the same wave_x signal, x being equal to a, b, c or d.

As previously mentioned, 32 fully different waveform signals are for example available (e.g. standard priming, low luminance priming, selective write operation, selective erase operation, sustain pulse, idle operation...) in a portion of the memory 30. Each of them could be decomposed in four basic wave signals like wave_a, wave_b, wave_c and wave_d, that will be performed in parallel. Each waveform signal can be for example built with up to 60 steps having a specific duration. Some steps could be defined as a group of steps repeated periodically. The timing for the steps of each waveform are stored in LUT that can be easily adapted to any new panel requirement. This is also the case for all other sub-modules of the PTC.

This sub-module is implemented by four parallel state machines defining the timing of each steps building a waveform w associated to the operation signal defined in the operation sequencer 14.

It is also possible, for each state machine, to work independently from the operation sequencer 14 for producing signals able to control any kind of hardware, which should be synchronized on the frame signal, for example for shutter glasses switch used in 3D PDPs.

### The waveform decoder sub-module

The waveform decoder sub-module 22 generates all control signals for controlling the scan and common plasma power boards. This sub-module is a simple decoder of the line waveform sub-module 21. Indeed, it translates the step signals received from the sub-module 21 into control signals dedicated directly to the power boards by using the elementary control signals stored in the memory 30.

As this PTC is fully programmable, any kind of power boards can be controlled by this PTC by simply modifying the content of the memory 30.

Preferably, all sub-modules are able to send ready signals back to their previous block to say that their current operation has been finished. With such a system, it is possible to avoid sending a new request for starting new operation or a new frame before everything has been properly achieved. This situation could occur for instance in case of VCR (Video Cassette Recording) trick mode, where the duration of the frame can oscillate depending on the speed-up used by the VCR.

## Claims

1. A power timing controller unit for a plasma display panel comprising a plurality of cells (1) arranged in rows and columns, an image memory (5) for memorizing the subfield frames of at least one image to be displayed by the plasma display panel, data drivers (2) and line power boards (3) for generating respectively voltage waveforms to be applied on the columns and lines of cells, said power timing controller unit (4) being used for controlling the image memory and the line power boards in order that the image frame stored in the image memory be displayed by the cells of the plasma display panel, **characterized in that** it comprises at least a programmable memory (30) comprising data defining the display mode of the panel and data defining elementary control signals required by the line power boards (3) for processing operations associated to each phase period of the frame and **in that** it generates control signals for the image memory (5) and the line power boards (3) from said data.

2. A power timing controller unit according to claim 1, **characterized in that** the data defining the display mode stored in the programmable memory (30) are :
- the display rate of the panel, and
- the number of subfields in the frame, their order, their weight and their start time position; and
- the phase operations required for each subfield;
- the duration and/or the type of each phase operation, and
- parameters defining the waveforms to be used for each phase operations.

3. A power timing controller unit according to claim 1 or 2, **characterized in that** it comprises further:
- a sequencer module (10) for generating control signals for the image memory and intermediate control signals for the line power boards from data defining the display mode of the panel, and
- a line controller module (20) for generating the control signals utilizable by the line power boards (3) from said intermediate control signals and said data defining elementary control signals required by the line power boards (3) for processing operations associated to each phase period of the frame.

4. A power timing controller unit according to claim 2 or 3, **characterized in that** the sequencer module (10) comprises :
- a mode sequencer (11) for generating frame signals adapted to the display rate of the plasma display panel and related control signals for the reading of the image memory (5),
- a frame sequencer (12) for generating, for each frame signal, a sequence of subfield signals specifying the content of a frame in terms of subfields,
- a subfield sequencer (13) for generating, for each subfield signal, a sequence of phase operation signals, each phase signal being selected in a group of priming signals, addressing signals, sustaining signals and erasing signals, and
- an operation sequencer (14) for generating, for each phase operation signal, intermediate control signals for the line controller module (20), said intermediate control signals being elementary phase signals necessary for implementing the corresponding phase operation.

5. A power timing controller unit according to claim 3, **characterized in that** the mode sequencer (11) is further capable of generating additional frame signals at the middle of the image frame.

6. A power timing controller unit according to one the preceding claims, **characterized in that** the data defining the display mode stored in programmable memories (30) include further a speed factor representative of the addressing speed for an addressing operation.

7. A power timing controller unit according to one of the preceding claims, **characterized in that** the data defining the display mode stored in programmable memories (30) include further the first line of cells and the number of lines to be addressed.

8. A power timing controller unit according to one of the claims 3 to 7, **characterized in that** the line controller module (20) comprises :
- a line waveform sub-module (21) for converting intermediate control signals into step signals, and
- a waveform decoder module (22) for producing from said step signals and elementary control signals stored in the programmable memory (30) control signals utilizable by the line power boards (3).

9. A plasma display panel comprising a plurality of cells (1) arranged in rows and columns, an image memory (5) for memorizing at least one image frame to be displayed by the plasma display panel, data drivers (2) and line power boards (3) for generating respectively voltage waveforms to be applied on the columns and lines of cells **characterized in that** it comprises a power timing controller unit (4) according to preceding claims for controlling the image memory (5) and the line power boards in order that the image frame stored in the image memory (5) be correctly displayed by the cells of the plasma display panel.
